# EUROPEAN PATENT SPECIFICATION

(11) **EP 2 959 635 B1**
(45) Date of publication and mention of the grant of the patent: **30.08.2017**
(21) Application number: 14708395.0
(22) Date of filing: 18.02.2014
(51) Int. Cl.: H04L 12/933, H04L 12/24

(54) **PROGRAMMABLE PHYSICAL NETWORK TOPOLOGIES FOR DATACENTERS**
PROGRAMMIERBARE PHYSIKALISCHE NETZWERKTOPOLOGIEN FÜR DATENZENTREN
TOPOLOGIES DE RÉSEAUX PHYSIQUES PROGRAMMABLES POUR LES CENTRES INFORMATIQUES

(30) Priority: 22.02.2013 US 201313774499
(43) Date of publication of application: 30.12.2015
(73) Proprietor: Microsoft Technology Licensing, LLC, Redmond, WA 98052 (US)
(72) Inventor: ELSON, Jeremy, Redmond, Washington 98052-6399 (US)
(74) Representative: Wallis, Helen Frances Mary
(86) International application number: PCT/US2014/016748
(87) International publication number: WO 2014/130403

(56) References cited:
- US-A1- 2012 099 863
- NATHAN FARRINGTON ET AL: "Helios: a hybrid electrical/optical switch architecture for modular data centers", COMPUTER COMMUNICATION REVIEW, ACM, NEW YORK, NY, US, vol. 41, no. 4, 30 August 2010 (2010-08-30), pages 339-350, XP058004896, ISSN: 0146-4833, DOI: 10.1145/2043164.1851223
- "Simplifying the Data Center Architecture: Reducing Network Tiers with MRJ21 Based Technology", Extreme Networks White Paper, 1 February 2010 (2010-02-01), pages 1-5, XP055120210, Retrieved from the Internet: URL:http://pt.westcon.com/documents/39999/ Simplifying_the_Data_Center_Architecture_M RJ21.pdf [retrieved on 2014-05-26]

## Description

### BACKGROUND

A network topology is an arrangement of the various elements of a computer network. The topological structure of a network may be represented physically or logically. Physical topology refers to the physical structure of a network including the placement of its components such as device location and cable location. Logical topology refers to data flows within a network, regardless of the physical design of the network. Many different common network topologies are known, such as, for example, point-to-point, bus, star, ring and mesh topologies.

A datacenter is a facility used to house computer systems and associated components, such as, for example, communications systems and storage systems. Many datacenters are currently wired in basically the same way. Racks are filled with computers and each computer is wired with a short cable to a top-of-rack switch. Each top-of-rack switch is wired to a higher-level "aggregation switch" and these aggregation switches are wired together with longer-distance copper or fiber optic cables. This type of datacenter configuration works well for simple network topologies.

"Helios: a hybrid electrical / optical switch architecture for modular data centers" by N. Farrington et. al. (as published in Computer Communication Review, ACM, 2010-08030, pages 339-350) describes a hybrid electrical / optical switch architecture which is a 2-level multi-rooted tree of pod switches and core switches (which can be either electrical packet switches or optical circuit switches).

US Patent Application published with the Publication Number 2012/099863 describes a hybrid optical / electrical switching system for data center networks. It describes a system which includes one or more electrical switches to transfer data in a data network; one or more optical switching groups coupled to each electrical switch, each switching group having one or more server racks,, each server rack coupled to a top of rack switch and an optical transceiver coupled to the top of rack switch; and an optical switching unit coupled to the one or more optical switching groups.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect provides a system to practice programmatic physical rewiring of a network topology, comprising: two or more racks of computer components, each rack having high density connectors; high density cables containing hundreds of electrical or fibre optic conductors connecting adjacent racks via the high density connectors; and at least one physical layer analog matrix switch integrated into each rack and having inputs and outputs, wherein the inputs to the matrix switch are both wires coming from computer components within the rack and connections arriving from other racks via the high density cables and connectors, and wherein the physical layer analog matrix switch is arranged to control connections between any inputs to and outputs from the physical layer analog matrix switch so that signals coming in from any of the high density connectors on the corresponding rack are connected to another high density connector on the rack or to wires that terminate in one of the computer components in the rack itself.

In general, the programmable physical network topology technique described herein pertains to a method of programmatically rewiring a network topology. In one embodiment, the technique uses racks with high-density connectors so that adjacent racks are interconnected with high-density cables (e.g., of many electrical or fiber optic conductors). This embodiment of the programmable physical network topology technique further integrates physical layer switches into the racks. The physical layer switches route the signals from off-rack cables to either in-rack devices or other off-rack devices.

More specifically, in one embodiment, the programmable physical network topology technique integrates some of the physical layer of a network into each rack. For example, racks have one or more high-density connectors on their sides, and integrated into each rack is a physical high-density analog matrix switch (for example, a physical crossbar switch). The high-density analog matrix switch or cross-bar switch connects multiple inputs to multiple outputs in a matrix manner. The inputs and outputs of the high-density analog matrix switch are arranged so that signals coming in from any of the high-density connectors can be routed either to one of the other high-density connectors, or up to wires that terminate in the rack itself. The connections that terminate in-rack connect to computer components, such as, for example, to either network interface cards of computers, or to higher-layer (e.g. Ethernet) switches or other networking gear. The high-density cables are attached between adjacent racks. Each high-density analog matrix switch can have a control connection that can be used to command it to make certain connectivity patterns between the computer components in the racks.

In this arrangement, an administrator (e.g., a network administrator) can create any wiring diagram desired-either manually, for example by using a spreadsheet, or programmatically for networks that have regular patterns (e.g., CLOS networks). The wiring diagram ultimately expresses a desired connectivity pattern defining pairs of connections that are to be made-for example, "Port 4 in Rack A is to connect to Port 29 in Rack L." In one embodiment of the programmable physical network topology, a centralized planning component can determine a configuration for all high-density analog matrix switches in all racks that satisfies the desired connectivity pattern. There will typically be many different possible paths through the racks from each desired source to destination and the centralized planning component can determine which route or routes will best balance the load on all paths when creating the desired connectivity pattern.

### BRIEF DESCRIPTION OF THE DRAWINGS

The specific features, aspects, and advantages of the disclosure will become better understood with regard to the following description, appended claims, and accompanying drawings where:
FIG. 1 depicts an exemplary schematic of one implementation of the programmable physical network topology technique.
FIG. 2 depicts another exemplary schematic of the implementation shown in FIG. 1.
FIG. 3 is an exemplary architecture for practicing one exemplary embodiment of the programmable physical network topology technique described herein.
FIG. 4 is another exemplary architecture for practicing one exemplary embodiment of the programmable physical network topology technique described herein.
FIG. 5 depicts yet another exemplary architecture for practicing the programmable physical network topology technique.
FIG. 6 is a schematic of an exemplary computing environment which can be used to practice the programmable physical network topology technique.

### DETAILED DESCRIPTION

In the following description of the programmable physical network topology technique, reference is made to the accompanying drawings, which form a part thereof, and which show by way of illustration examples by which the programmable physical network topology technique described herein may be practiced. It is to be understood that other embodiments may be utilized and structural changes may be made without departing from the scope of the claimed subject matter.

### 1.0 PROGRAMMABLE PHYSICAL NETWORK TOPOLOGY TECHNIQUE

The following sections provide background information, an overview of the programmable physical network topology technique, as well as exemplary architectures for practicing the technique. Details of various embodiments and components of the programmable physical network topology technique are also provided.

### 1.1 Background

In computing, network virtualization refers to the process of combining hardware and software network resources and functionality into a single, software based entity, a virtual network. Many resources in a datacenter are now virtualized: storage, computation, content distribution, and network connectivity, for example. However, the underlying *physical* topology of networks is currently difficult to change without physically rewiring cables in a datacenter.

There are many reasons why it is difficult to change the physical wiring of a network. First, physically rewiring cables in a datacenter is error-prone. While many network topologies are straightforward, many recent developments in networking, such as the development of CLOS networks, require very complex wiring. Second, physically rewiring cables is labor-intensive. While modern virtualized environments allow computation and storage resources to be allocated without any human intervention, physical wiring cannot be automatically changed in response to customer requests. Furthermore, while virtual local area networks (LANs) and Virtual Private Networks (VPNs) can be reprogrammed, in some cases this might have a cost in performance or flexibility. The inability to wire components in exactly the way desired is one factor that keeps customers building their own datacenters. Third, because it is labor-intensive, manual wiring is slow - whereas many other resources can be allocated in seconds, physical wiring can typically only be changed in hours.

Many datacenters are currently wired in basically the same way: racks are filled with computers; each computer is wired with a short cable to a top-of-rack switch; each top-of-rack switch is wired to a higher-level "aggregation switch"; aggregation switches are wired together with longer-distance copper or fiber optic cables. This works well for simple topologies. However, as increasingly complex wiring has been required by modern networks, such as CLOS networks for example. Simply attaching the wiring correctly has been an impediment to deployment of more complex networks.

### 1.2 Overview of the Technique

One embodiment 100 of the programmable physical network topology technique integrates some of the physical layer of a network into each rack. In this embodiment, racks 102 have one or more high-density connectors 104 on each of their sides, and integrated into the rack is a physical high-density analog matrix switch 106 (e.g., a physical crossbar switch). Each high-density analog matrix switch 106 also has a control connection that can be used to command it to make certain connection patterns.

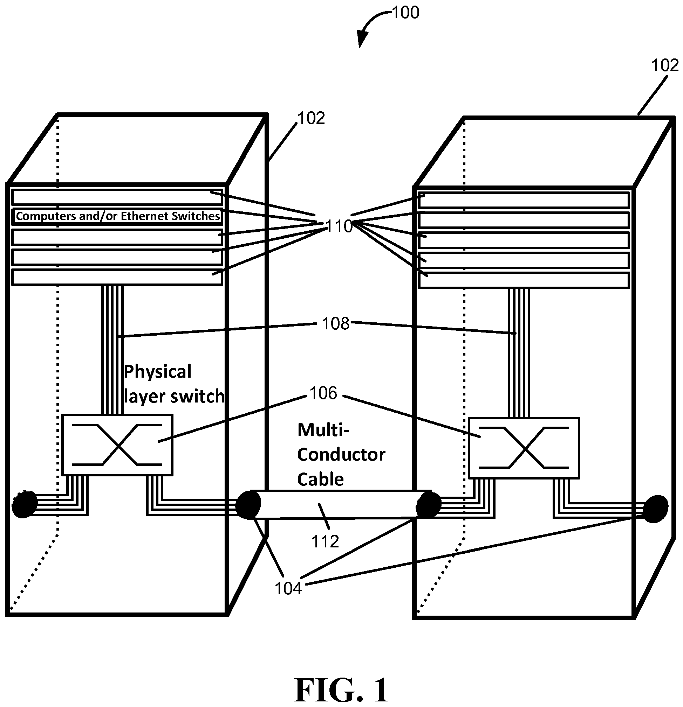

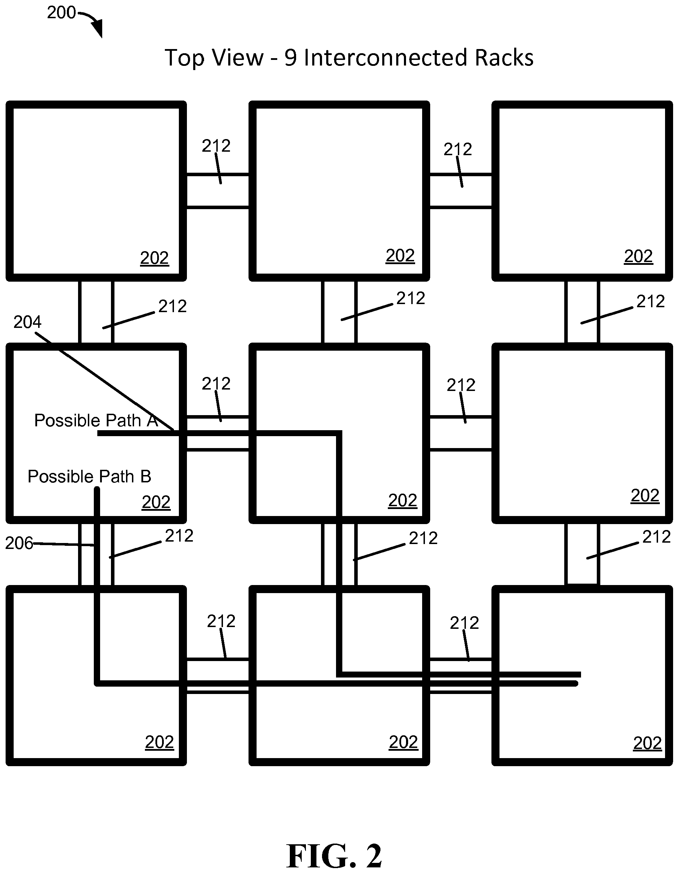

The inputs and outputs of this high-density analog matrix switch 106 (e.g., crossbar switch) are arranged so that signals coming in from any of the high-density connectors 104 can be routed either to one of the other high-density connectors 104, or up to wires 108 that terminate in the rack itself, as seen in FIG. 1. The connections that terminate in-rack 108 are intended to connect to components 110 in the rack 102, for example to network interface cards of computers, or to higher-layer (e.g. Ethernet) switches or other networking gear. High-density cables 112 (e.g., with hundreds of conductors) are attached between each adjacent rack 102. This can be more clearly seen in the configuration 200 shown in FIG. 2. FIG. 2 shows a top view of nine adjacent racks 202 interconnected with high-density cables 212.

In this arrangement (shown in FIG. 1 and FIG. 2), an administrator can create any wiring diagram desired-either manually, for example using a spreadsheet, or programmatically for networks that have regular patterns (e.g. CLOS networks). The wiring diagram ultimately expresses pairs of connections that are to be made-"Port 4 in Rack A is to connect to Port 29 in Rack L." A centralized planning component can determine a configuration for all matrix switches in all racks that satisfies the desired connectivity pattern. As shown in FIG. 2, that there will be many different possible routes through the racks from each desired source to destination. For example, in FIG. 2, to connect the middle rack in the left column to the bottom rack in the right column, it is possible to take Path A 204 or Path B 206.

In one embodiment of the programmable physical network topology technique the central planning component can determine which connection path provides the least load to make the desired connectivity pattern.

The programmable physical network topology technique allows for the programmatic physical rewiring of a network topology. This makes datacenter wiring less labor-intensive, less error prone and more flexible. The configuration shown in FIG. 1 and FIG. 2 has several advantages. One, it makes wiring easy - rather than long, hard-to-trace runs snaking through the datacenter, all connections are done using short connectors between adjacent racks. Furthermore, rewiring can be done programmatically. Documentation of the wiring path is guaranteed to match reality. Additionally, complex wiring arrangements can be implemented more reliably and changed easily after initial installation. Untrusted customers (those that do not have the necessary privilege or authorization to access a datacenter) can even get custom wiring without the expense of paying a person to manually attach cables.

A general overview of the programmable physical network topology technique having been provided, the following section provides a description of exemplary architectures for practicing the programmable physical network topology technique.

### 1.3 Exemplary Architectures

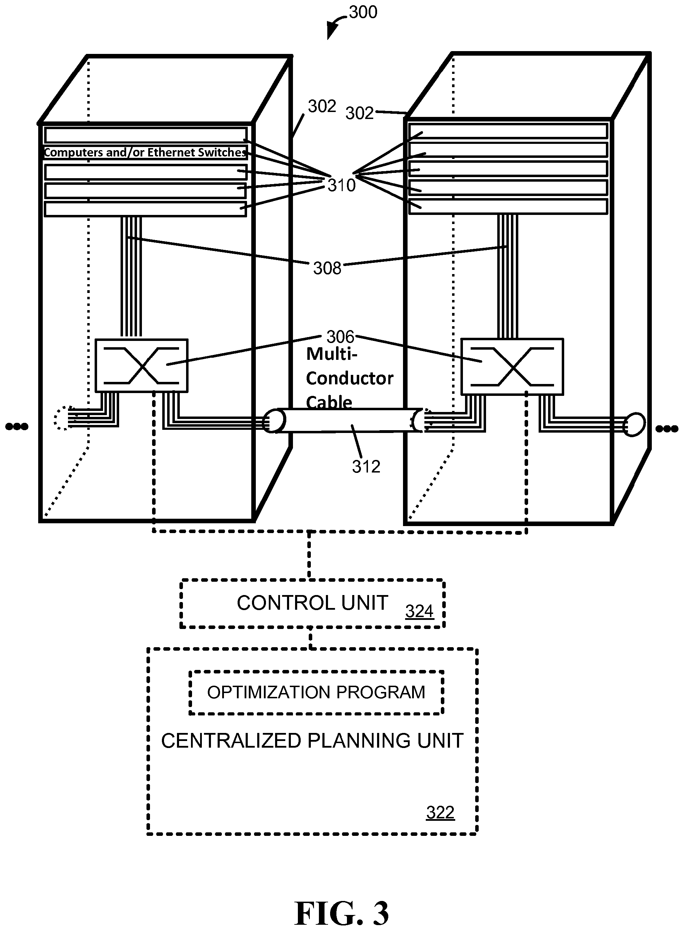

FIG. 3 shows an exemplary architecture 300 for practicing one embodiment of the programmable physical network topology technique. This exemplary architecture allows the programmatic rewiring of a network topology. The architecture 300 includes two or more racks 302 of computer components 310. There are high-density cables 312 connecting adjacent racks 302. The architecture 300 also includes at least one analog matrix switch 306 (for example, a high-density analog matrix switch) integrated into each rack 302. Each analog matrix switch 306 controls connections between any inputs to, and outputs from, the matrix switch 306 so that signals coming in to the rack 302 are connected to another analog matrix switch 306 (e.g., via a high density cable 312) or to wires 308 that terminate in one of the computer components 310 in the rack 302 itself. The computer components 310 can be, for example, network interface cards of computers, higher layer switches, or other networking gear.

The architecture 300 can, but does not have to, further include a centralized planning component 322 that finds a configuration for all matrix switches 306 in all racks 302 that satisfies a desired connectivity pattern. The architecture 300 can also include a control unit 324 that commands the matrix switches 306 to make a desired connectivity pattern.

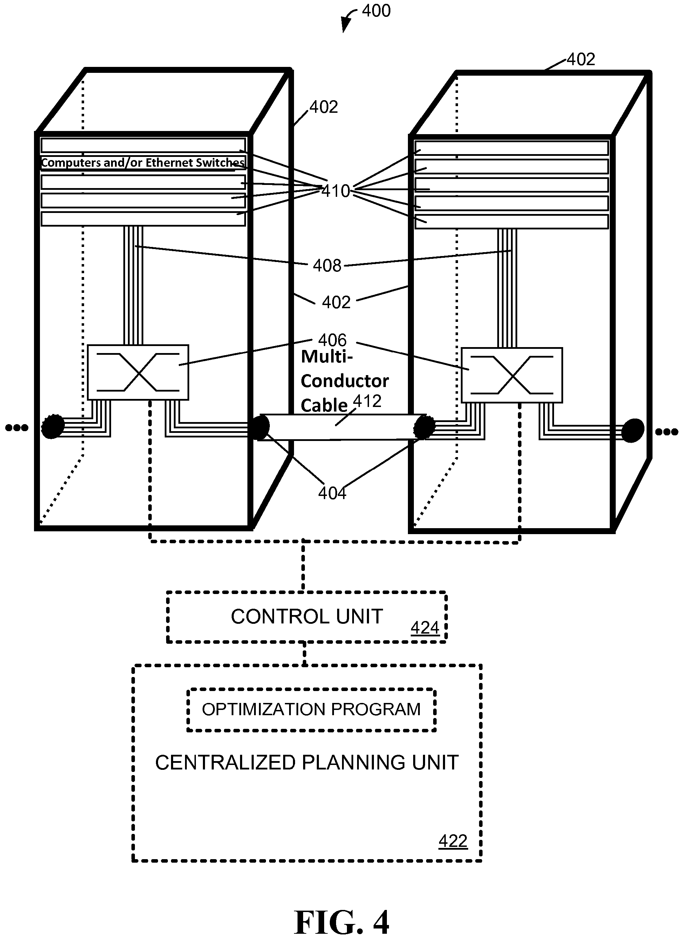

FIG. 4 shows another exemplary architecture 400 for practicing one embodiment of the programmable physical network topology technique. The architecture 400 includes two or more racks 402 of computer components 410. The racks 402 have one or more high-density connectors 404 on each of a predetermined number of sides. For example, one or more high-density connectors 404 could be placed on each of four sides. At least one high-density analog matrix switch 406 is integrated into each rack 402. Each high-density analog matrix switch 406 has inputs and outputs. The inputs to, and outputs from, the high-density analog matrix switch 406 are arranged so that signals coming in from any of the high density connectors 404 on the rack are routed to another high-density connector 404 or to wires 408 that ultimately terminate in one of the computer components 410 in the rack 402 itself. (It should be noted that if more than one analog matrix switch is disposed in a given rack, the wires could also be connected to another analog matrix switch in the same rack. For example, this would be the case when a larger analog matrix switch is needed to make the desired connection pattern between the computer components.) Each high-density analog matrix switch 406 can have a control connection (not shown) that can be used to command the high-density analog matrix switch to make certain connection patterns between the computer components 410. High-density cables 412 connect adjacent racks 402 via the high density connectors 404.

The architecture 400 can further include a centralized planning component 422 that finds a configuration for all high-density analog matrix switches in all racks that satisfies a desired connectivity pattern. For example, a network administrator can input a desired connectivity pattern specifying which computer components 410 are to be connected, and the centralized planning component 422 can determine the settings for all high-density analog matrix switches 406 needed to achieve this desired connectivity pattern. The architecture 400 can also include a control unit 424 that commands the matrix switches 412 to make a desired connectivity pattern using the control interface on each high-density analog matrix switch. Alternately, a separate control unit is not utilized and the centralized planning unit 422 can be used to command the high-density analog matrix switches to configure in accordance with the desired connectivity pattern.

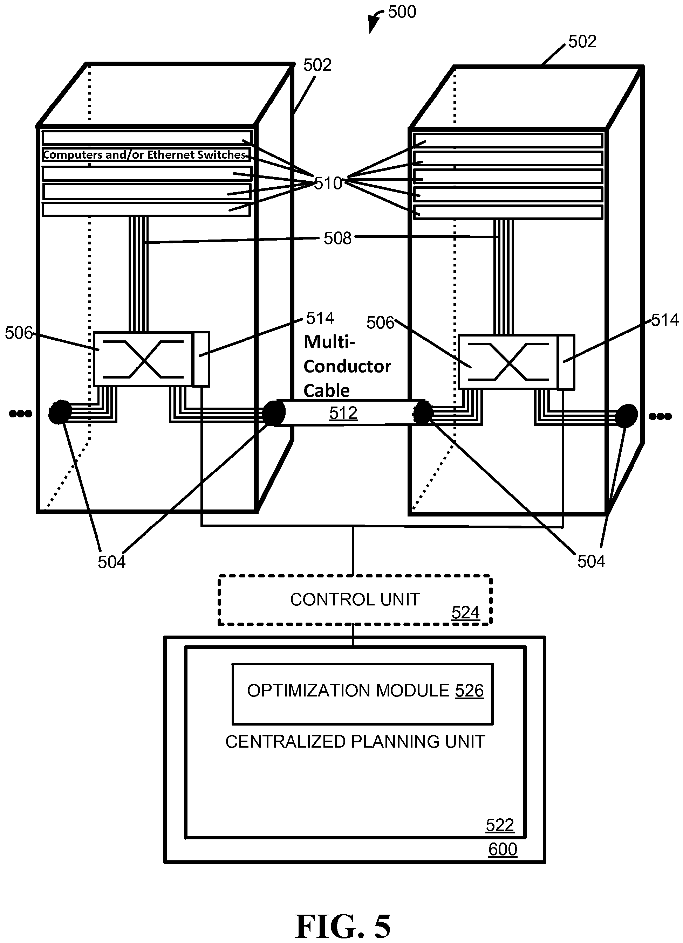

FIG. 5 depicts yet another exemplary architecture 500 according to the programmable physical network topology technique. This architecture 500 programmatically rewires a network topology that has two or more racks 502 of computer components 510, each rack 502 having one or more high-density connectors 504. High-density cables 512 (e.g., hundreds of electrical or fiber optic cables) connect adjacent racks 502 via the high-density connectors 504. At least one high-density analog matrix switch 506 integrated into each rack controls connections between any inputs to, and outputs from, the high-density analog matrix switch 506 using a control interface 514 on each matrix switch 506 so that signals coming in from any of the high density connectors 504 on the rack 502 are connected to another high-density connector 504 or to wires 508 that terminate in one of the computer components 510 in the rack itself or to another matrix switch (e.g., within the same rack if there is more than one analog matrix switch in the rack in order to create a larger matrix switch).

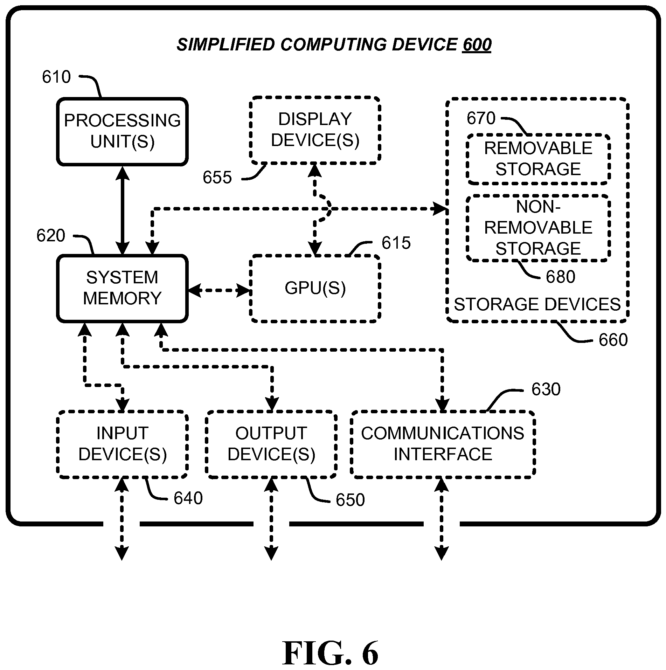

The architecture 500 also includes a centralized planning component 522 that resides on a general purpose computing device 600, such as will be discussed in greater detail with respect to FIG. 6. The centralized planning unit 522 determines a configuration for all high-density analog matrix switches 506 in all racks 504 that satisfies a desired connectivity pattern. For example, a network administrator can input a desired connectivity pattern specifying which computer components 510 are to be connected, and the centralized planning component 522 will determine the settings for all high-density analog matrix switches 506 needed to achieve this desired connectivity pattern. The centralized planning component 522 further can determine a configuration for the desired connectivity pattern that connects desired computer components without overloading any connections via an optimization module 526. For example, a global list of desired connections between computer components can be provided to the centralized planning component, and the centralized planning component will determine a loading plan having a configuration that does not overload any connections. This is in part possible because it is possible to connect the computer components via more than one path.

The architecture 500 can also include a control unit 524 that commands the high-density analog matrix switches 506 to make a desired connectivity pattern using a control interface 514 on each high-density analog matrix switch. Alternately, a separate control unit 524 is not necessary and the centralized planning unit 522 can be used to directly command the high-density analog matrix switches 506 to configure in accordance with the desired connectivity pattern using the control interfaces 514 on each switch 506.

### 2.0 Details of the Technique

This section describes some of the components of the programmable physical network topology technique in greater detail.

### 2.1 Analog Matrix Switches

As discussed previously in the embodiments of the programmable physical network topology technique, at least one physical analog matrix switch is integrated into each rack. In general, a matrix switch or crossbar switch connects multiple input to multiple outputs in a matrix manner. It is typically an assembly of individual switches between multiple inputs and multiple outputs. The switches are arranged in a matrix. If a matrix or crossbar switch has M inputs and N outputs, then there is a matrix of M X N cross-points that when closed connect one of M inputs to one of N outputs.

High-density analog matrix switches area a standard electronic component. The inputs and the outputs can be essentially any analog signal (provided the frequency is within the switch's specifications). In embodiments of the technique, in a rack with just one analog matrix switch, inputs to the matrix switch are both wires coming from computer components within the rack and connections arriving from other racks via the high-density cables and connectors. In a rack with more than one high-density matrix switch, the matrix switches are also connected to each other - for example, four 32x32 switches can be combined to produce a 64x64 matrix switch. Since any input of a matrix switch can be connected to any output, the technique has flexibility to either route a signal from a high-density cable up to a computer component rack, or to route it right out to one of the other high-density cables connected to the rack.

As discussed previously, high-density cables connect the high-density matrix switches in adjacent racks. Each high-density analog matrix switch also has a control connection that can be used to command it to make certain connectivity patterns between computer components. For example, if the high-density analog matrix switch is a physical crossbar switch, the control connection is standard on such a switch. The control connection on each high-density analog matrix switch can be used to set the desired connectivity patterns between computer components using the centralized planning component or a dedicated control unit. It should be noted that a high-density analog matrix switch can route incoming signals through a rack without routing the incoming signals to any computer components in the rack.

### 2.2 High-Density Cables

As mentioned previously, high-density cables connect the high-density matrix switches in adjacent racks (e.g., via high-density connectors on the racks). These high-density cables can contain hundreds of conductors that can be used to connect all of the computer components of all racks in the architecture. The high-density cables can, for example, either be electrical (e.g., copper cables) or optical (e.g., fiber optic cables).

### 2.3 High-Density Connectors

As discussed previously, the high-density connectors are disposed on the sides of the racks and are used to connect the high-density cables of all adjacent racks in the architecture. The high-density cables can, for example, either be electrical (copper cables) or optical (fiber optic cables) and the high-density connectors are connectors that are suitable to connect the corresponding type of high-density cable. The connections made are "physical layer" connections, that are protocol independent.

### 2.4 Computer Components

The computer components in the racks can be connected to, for example, network interface cards of computers, higher-layer network switches (e.g., Ethernet switches) or other networking gear. The computer components could be servers, sensors or anything else with an Ethernet port.

### 2.5 Centralized Planning Component

As discussed above, a centralized planning component can determine a configuration for all high-density analog matrix switches in all racks to satisfy a desired connectivity pattern. Furthermore, the centralized planning component can determine a configuration for the desired connectivity pattern that connects desired computer components without overloading any connections. For example, a global list of connections between computer components (for example, in the form of a spreadsheet) can be provided to the centralized planning component, and the centralized planning component can determine a loading plan having a configuration that does not overload any connections. There are various ways to compute this loading plan, such as, for example, using linear programming, using greedy algorithms that simply use the least-loaded connection first, and by using randomized algorithms such as simulated annealing and exhaustive search algorithms.

### 2.5.1 Manual Configuration

In some embodiments of the technique, the paths to connect the computer components and the settings of the high-density analog matrix switches are manually determined by a human being. A human manually decides how each wire is routed, and the matrix switches' internal routing networks are changed to reflect these decisions. For example, given the 3x3 grid of racks as shown in FIG. 2, if an administrator wished to connect a wire from the top-left rack to the bottom right rack, there are various options of doing this. Starting from the top-left, the wire could be routed right-right-down-down, or down-down-right-right, or down-right-down-right, or even down-right-up-right-down-down. In manual configuration, a human being would choose the desired path to connect the components. In automatic configuration, on the other hand, a computer program automatically makes these decisions.

### 2.5.2 Automatic Configuration

In some embodiments of the technique, the high-density analog matrix switches are automatically configured or reconfigured to change the network topology. For example, after the centralized planning component determines a configuration for all of the high-density analog matrix switches in the racks, the centralized planning component can send commands to each of the switches to configure them as required for the determined configuration. Alternately, a separate control unit, discussed below, can receive the determined configuration from the centralized planning component and then command the high-density analog matrix switches to configure themselves in the determined configuration.

### 2.6 Control Unit

In some embodiments of the technique, a control unit commands the high-density analog matrix switches to make the desired connectivity pattern using a control interface on each high-density analog matrix switch.

### 3.0 Exemplary Overating Environments:

The programmable physical network topology technique described herein is operational within numerous types of general purpose or special purpose computing system environments or configurations. FIG. 6 illustrates a simplified example of a general-purpose computer system on which various embodiments and elements of the programmable physical network topology technique, as described herein, may be implemented. It should be noted that any boxes that are represented by broken or dashed lines in FIG. 6 represent alternate embodiments of the simplified computing device, and that any or all of these alternate embodiments, as described below, may be used in combination with other alternate embodiments that are described throughout this document.

For example, FIG. 6 shows a general system diagram showing a simplified computing device 600. Such computing devices can be typically be found in devices having at least some minimum computational capability, including, but not limited to, personal computers, server computers, hand-held computing devices, laptop or mobile computers, communications devices such as cell phones and PDA's, multiprocessor systems, microprocessor-based systems, set top boxes, programmable consumer electronics, network PCs, minicomputers, mainframe computers, audio or video media players, etc.

To allow a device to implement the programmable physical network topology technique, the device should have a sufficient computational capability and system memory to enable basic computational operations. In particular, as illustrated by FIG. 6, the computational capability is generally illustrated by one or more processing unit(s) 610, and may also include one or more GPUs 615, either or both in communication with system memory 620. Note that that the processing unit(s) 610 of the general computing device may be specialized microprocessors, such as a DSP, a VLIW, or other micro-controller, or can be conventional CPUs having one or more processing cores, including specialized GPU-based cores in a multi-core CPU.

In addition, the simplified computing device of FIG. 6 may also include other components, such as, for example, a communications interface 630. The simplified computing device of FIG. 6 may also include one or more conventional computer input devices 640 (e.g., pointing devices, keyboards, audio input devices, video input devices, haptic input devices, devices for receiving wired or wireless data transmissions, etc.). The simplified computing device of FIG. 6 may also include other optional components, such as, for example, one or more conventional computer output devices 650 (e.g., display device(s) 655, audio output devices, video output devices, devices for transmitting wired or wireless data transmissions, etc.). Note that typical communications interfaces 630, input devices 640, output devices 650, and storage devices 660 for general-purpose computers are well known to those skilled in the art, and will not be described in detail herein.

The simplified computing device of FIG. 6 may also include a variety of computer readable media. Computer readable media can be any available media that can be accessed by computer 600 via storage devices 660 and includes both volatile and nonvolatile media that is either removable 670 and/or non-removable 680, for storage of information such as computer-readable or computer-executable instructions, data structures, program modules, or other data. Computer readable media may comprise computer storage media and communication media. Computer storage media refers to tangible computer or machine readable media or storage devices such as DVD's, CD's, floppy disks, tape drives, hard drives, optical drives, solid state memory devices, RAM, ROM, EEPROM, flash memory or other memory technology, magnetic cassettes, magnetic tapes, magnetic disk storage, or other magnetic storage devices, or any other device which can be used to store the desired information and which can be accessed by one or more computing devices.

Storage of information such as computer-readable or computer-executable instructions, data structures, program modules, etc., can also be accomplished by using any of a variety of the aforementioned communication media to encode one or more modulated data signals or carrier waves, or other transport mechanisms or communications protocols, and includes any wired or wireless information delivery mechanism. Note that the terms "modulated data signal" or "carrier wave" generally refer a signal that has one or more of its characteristics set or changed in such a manner as to encode information in the signal. For example, communication media includes wired media such as a wired network or direct-wired connection carrying one or more modulated data signals, and wireless media such as acoustic, RF, infrared, laser, and other wireless media for transmitting and/or receiving one or more modulated data signals or carrier waves. Combinations of the any of the above should also be included within the scope of communication media.

Further, software, programs, and/or computer program products embodying the some or all of the various embodiments of the programmable physical network topology technique described herein, or portions thereof, may be stored, received, transmitted, or read from any desired combination of computer or machine readable media or storage devices and communication media in the form of computer executable instructions or other data structures.

Finally, the programmable physical network topology technique described herein may be further described in the general context of computer-executable instructions, such as program modules, being executed by a computing device. Generally, program modules include routines, programs, objects, components, data structures, etc., that perform particular tasks or implement particular abstract data types. The embodiments described herein may also be practiced in distributed computing environments where tasks are performed by one or more remote processing devices, or within a cloud of one or more devices, that are linked through one or more communications networks. In a distributed computing environment, program modules may be located in both local and remote computer storage media including media storage devices. Still further, the aforementioned instructions may be implemented, in part or in whole, as hardware logic circuits, which may or may not include a processor.

It should also be noted that any or all of the aforementioned alternate embodiments described herein may be used in any combination desired to form additional hybrid embodiments. Although the subject matter has been described in language specific to structural features and/or methodological acts, it is to be understood that the subject matter defined in the appended claims is not necessarily limited to the specific features or acts described above. The specific features and acts described above are disclosed as example forms of implementing the claims.

## Claims

1. A system to practice programmatic physical rewiring of a network topology, comprising:
two or more racks of computer components (102, 202, 302, 402, 502), each rack having high density connectors (104, 404, 504);
high density cables (112, 212, 312, 412, 512) containing hundreds of electrical or fibre optic conductors connecting adjacent racks via the high density connectors; and
at least one physical layer analog matrix switch (106, 306, 406, 506) integrated into each rack and having inputs and outputs, wherein the inputs to the matrix switch are both wires coming from computer components within the rack and connections arriving from other racks via the high density cables and connectors, and wherein the physical layer analog matrix switch is arranged to control connections between any inputs to and outputs from the physical layer analog matrix switch so that signals coming in from any of the high density connectors on the corresponding rack are connected to another high density connector on the rack or to wires that terminate in one of the computer components in the rack itself.

2. The system of claim 1, further comprising a centralized planning component (322, 422, 522) that determines a configuration for all physical layer analog matrix switches in all racks that satisfies a desired connectivity pattern.

3. The system of claim 2, wherein the centralized planning component determines a configuration for the desired connectivity pattern that connects desired computer components without overloading any connections.

4. The system of claim 2, wherein a global list of connections between computer components is provided to the centralized planning component, and wherein the centralized planning component determines a loading plan having a configuration that does not overload any connections.

5. The system of claim 1, further comprising a control unit (324, 424, 524) that commands the physical layer analog matrix switches to make a desired connectivity pattern using a control interface on each physical layer analog matrix switch.

6. The system of claim 1, wherein the high-density cables contain all cables necessary to connect the computer connections in all of the racks.

7. The system of claim 1, wherein a physical layer analog matrix switch routes incoming signals through the rack without routing the incoming signals to any computer components in the rack.

8. The system of claim 1, wherein the physical layer analog matrix switches are automatically reconfigured to change the network topology in real-time.

9. The system of claim 2, wherein the centralized planning component comprises:
a general purpose computing device (600); and
a computer program comprising program modules executable by the general purpose computing device, which when executed direct the computing device to:
find a configuration for all physical layer analog matrix switches in all racks that satisfies a desired connectivity pattern; and
command the physical layer analog matrix switches to make the desired connectivity pattern via the control connections.

10. The system of Claim 9, wherein the centralized planning component further comprises a program module to determine an optimum configuration for the physical layer analog matrix switches so that the desired connectivity pattern is achieved while balancing the load on all connections.

## Patentansprüche

1. System zum Ausüben einer programmatischen physikalischen Umverdrahtung einer Netzwerktopologie, aufweisend:
zwei oder mehr Racks von Computerkomponenten (102, 202, 302, 402, 502), wobei jedes Rack hochdichte Verbinder (104, 404, 504) aufweist;
hochdichte Kabel (112, 212, 312, 412, 512), die hunderte von elektrischen oder faseroptischen Leitern enthalten, die benachbarte Racks über die hochdichten Verbinder verbinden; und
mindestens einen analogen Matrixschalter (106, 306, 406, 506) der physikalischen Schicht, integriert in jedes Rack und Eingänge und Ausgänge aufweisend, wobei die Eingänge zu dem Matrixschalter sowohl Drähte, die von Computerkomponenten innerhalb des Racks kommen, als auch Verbindungen sind, die von anderen Racks über die hochdichten Kabel und Verbinder ankommen, und wobei der analoge Matrixschalter der physikalischen Schicht dazu angeordnet ist, Verbindungen zwischen beliebigen Eingängen hinein und Ausgängen hinaus aus dem analogen Matrixschalter der physikalischen Schicht zu steuern, so dass Signale, die von einem beliebigen der hochdichten Verbinder an dem entsprechenden Rack hereinkommen, mit einem anderen hochdichten Verbinder an dem Rack oder mit Drähten, die in einer der Computerkomponenten in dem Rack selbst enden, verbunden werden.

2. System nach Anspruch 1, ferner aufweisend eine zentrale Planungskomponente (322, 422, 522), die eine Konfiguration für alle analogen Matrixschalter der physikalischen Schicht in allen Racks bestimmt, die ein gewünschtes Konnektivitätsmuster erfüllt.

3. System nach Anspruch 2, wobei die zentrale Planungskomponente eine Konfiguration für das gewünschte Konnektivitätsmuster bestimmt, die die gewünschten Computerkomponenten verbindet, ohne jegliche Verbindungen zu überlasten.

4. System nach Anspruch 2, wobei der zentralen Planungskomponente eine globale Liste von Verbindungen zwischen Computerkomponenten zur Verfügung gestellt wird und wobei die zentrale Planungskomponente einen Lastplan mit einer Konfiguration definiert, die keine Verbindungen überlastet.

5. System nach Anspruch 1, ferner aufweisend eine Steuerungseinheit (324, 424, 524), die die analogen Matrixschalter der physikalischen Schicht anweist, ein gewünschtes Konnektivitätsmuster unter Verwendung einer Steuerungsschnittstelle an jedem analogen Matrixschalter der physikalischen Schicht zu bilden.

6. System nach Anspruch 1, wobei die hochdichten Kabel alle Kabel enthalten, die zum Verbinden der Computerverbindungen in allen Racks erforderlich sind.

7. System nach Anspruch 1, wobei ein analoger Matrixschalter der physikalischen Schicht eingehende Signale durch das Rack leitet, ohne die ankommenden Signale zu beliebigen Computerkomponenten in dem Rack zu leiten.

8. System nach Anspruch 1, wobei die analogen Matrixschalter der physikalischen Schicht automatisch rekonfiguriert werden, um die Netzwerktopologie in Echtzeit zu ändern.

9. System nach Anspruch 2, wobei die zentrale Planungskomponente aufweist:
eine Mehrzweckcomputervorrichtung (600); und
ein Computerprogramm, das Programmmodule aufweist, die von der Mehrzweckcomputervorrichtung ausgeführt werden können, die, wenn sie ausgeführt werden, die Computervorrichtung steuern zum:
Finden einer Konfiguration für alle analogen Matrixschalter der physikalischen Schicht in allen Racks, die ein gewünschtes Konnektivitätsmuster erfüllt; und
Anweisen der analogen Matrixschalter der physikalischen Schicht, das gewünschte Konnektivitätsmuster über die Steuerverbindungen herzustellen.

10. System nach Anspruch 9, wobei die zentrale Planungskomponente ferner ein Programmmodul zum Bestimmen einer optimalen Konfiguration für die analogen Matrixschalter der physikalischen Schicht aufweist, so dass das gewünschte Konnektivitätsmuster erreicht wird, während die Last auf alle Verbindungen ausgeglichen wird.

## Revendications

1. Système pour effectuer un recâblage physique programmatique d'une topologie de réseau, comprenant :
deux ou plus de baies de composants informatiques (102, 202, 302, 402, 502), chaque baie ayant des connecteurs de haute densité (104, 404, 504) ;
des câbles de haute densité (112, 212, 312, 412, 512) contenant des centaines de conducteurs électriques ou des conducteurs à fibre optique connectant des baies adjacentes via les connecteurs de haute densité ; et
au moins un commutateur à matrice analogique à couche physique (106, 306, 406, 506) intégré à chaque baie et ayant des entrées et des sorties, dans lequel les entrées dans le commutateur à matrice sont à la fois des câbles provenant de composants informatiques au sein de la baie et des connexions arrivant d'autres baies via les câbles et les connecteurs de haute densité, et dans lequel le commutateur à matrice analogique à couche physique est agencé pour commander des connexions entre des entrées quelconques et des sorties quelconques du commutateur à matrice analogique à couche physique de sorte que les signaux entrants venant de l'un quelconque des connecteurs de haute densité sur la baie correspondante soient connectés à un autre connecteur de haute densité sur la baie ou à des câbles qui se terminent dans l'un des composants informatiques de la baie elle-même.

2. Système selon la revendication 1, comprenant en outre un composant de planification centralisé (322, 422, 522) qui détermine une configuration pour tous les commutateurs à matrice analogique à couche physique de toutes les baies qui réponde à un motif de connectivité souhaité.

3. Système selon la revendication 2, dans lequel le composant de planification centralisé détermine une configuration pour le motif de connectivité souhaité qui connecte des composants informatiques souhaités sans surcharger de connexions quelconques.

4. Système selon la revendication 2, dans lequel une liste globale de connexions entre des composants informatiques est fournie au composant de planification centralisé et dans lequel le composant de planification centralisé détermine un plan de chargement ayant une configuration qui ne surcharge pas de connexions quelconques.

5. Système selon la revendication 1, comprenant en outre une unité de commande (324, 424, 524) qui commande les commutateurs à matrice analogique à couche physique pour établir un motif de connectivité souhaité en utilisant une interface de commande sur chaque commutateur à matrice analogique à couche physique.

6. Système selon la revendication 1, dans lequel les câbles de haute densité contiennent tous des câbles nécessaires pour connecter les connexions informatiques dans la totalité des baies.

7. Système selon la revendication 1, dans lequel un commutateur à matrice analogique à couche physique achemine des signaux entrants à travers la baie sans acheminer les signaux entrants à des composants informatiques quelconques de la baie.

8. Système selon la revendication 1, dans lequel les commutateurs à matrice analogique à couche physique sont automatiquement reconfigurés pour changer la topologie du réseau en temps réel.

9. Système selon la revendication 2, dans lequel le composant de planification centralisé comprend :
un dispositif informatique universel (600) ; et
un programme informatique comprenant des modules de programmation exécutables par le dispositif informatique universel qui, lorsqu'ils sont exécutés, amènent le dispositif informatique à :
trouver une configuration pour tous les commutateurs à matrice analogique à couche physique de toutes les baies qui réponde à un motif de connectivité souhaité ; et
commander les commutateurs à matrice analogique à couche physique d'établir le motif de connectivité souhaité via les connexions de commande.

10. Système selon la revendication 9, dans lequel le composant de planification centralisé comprend en outre un module de programmation pour déterminer une configuration optimale pour les commutateurs à matrice analogique à couche physique de sorte que le motif de connectivité souhaité soit obtenu tout en équilibrant la charge sur toutes les connexions.
